# FASCICULE DE BREVET EUROPEEN

(11) **EP 0 661 846 B1**
(45) Date de publication et mention de la délivrance du brevet: **24.10.2001**
(21) Numéro de dépôt: 94402925.5
(22) Date de dépôt: 19.12.1994
(51) Int. Cl.: H04L 9/32

(54) **Procédé d'authentification d'au moins un dispositif d'identification par un dispositif de vérification utilisant un protocole à apport nul de connaissance**
Verfahren zur Authentifizierung mindestens einer Identifikationsvorrichtung einer Verifikationsvorrichtung unter Verwendung eines Null-Kenntnis-Protokolls
Method for authenticating at least one identification device by a verification device using a zero-knowledge protocol

(30) Priorité: 30.12.1993 FR 9315879
(43) Date de publication de la demande: 05.07.1995
(73) Titulaire: Stern, Jacques, F-75013 Paris (FR)
(72) Inventeur: Stern, Jacques, F-75013 Paris (FR)
(74) Mandataire: Ruellan-Lemonnier, Brigitte

(56) Documents cités:
- EP-A- 0 252 499
- US-A- 4 932 056
- ADVANCES IN CRYPTOLOGY - CRYPTO '93 22-26 August 1993, Santa Barbara (US) NEW YORK (US) pages 13-20;

## Description

La présente invention concerne un nouveau procédé d'authentification d'au moins un dispositif d'identification par un dispositif de vérification, cette authentification étant réalisée par un protocole à apport nul de connaissance basé sur le problème des équations linéaires contraintes.

Le problème des équations linéaires contraintes (Constrained linear équations : CLE en langue anglaise) consiste à trouver des valeurs satisfaisant un certain nombre d'équations linéaires modulo un nombre premier d, ces valeurs étant de plus contraintes à se trouver dans un ensemble prescrit X.

La présente invention s'applique plus particulièrement au cas des communications dites sécurisées où deux dispositifs échangent des données à travers un canal dont la sécurité est suspecte. Dans ce cas, il est essentiel d'avoir un moyen de reconnaissance mutuelle, à savoir un moyen permettant au dispositif de vérification d'authentifier un utilisateur et de lui permettre un accès aux données ou au service. Il existe de nombreux exemples nécessitant la mise en oeuvre de ce type de communication sécurisée. On peut citer, notamment, le cas des ordinateurs de type bancaire permettant d'effectuer des transferts d'ordre, des distributeurs automatiques de billets, des décodeurs de télévision à péage, des publiphones.

Dans ce contexte, on utilise fréquemment des méthodes d'authentification qui sont basées sur des techniques cryptographiques à clés secrètes. Ces méthodes sont, jusqu'à ce jour, les plus simples à mettre en oeuvre. Dans le cadre de ces méthodes, le dispositif d'identification, en général une carte à puce, et le dispositif de vérification tel qu'un lecteur de carte, un décodeur, un publiphone, partagent la même clé secrète et l'identification est accomplie par un algorithme symétrique ou une fonction à sens unique.

L'inconvénient de ces méthodes réside dans le fait que les deux parties, à savoir le dispositif de vérification et le dispositif d'identification, doivent coopérer mutuellement et secrètement. Cette condition n'est pas toujours vérifiée. En effet, un élément pirate peut acheter le dispositif de vérification et l'analyser pour connaître sa structure interne. Ensuite, l'élément pirate est techniquement capable de réaliser des dispositifs d'identification performants, car les clés secrètes sont présentes aux deux extrémités du réseau, à savoir dans le dispositif de vérification et dans le dispositif d'identification.

Il est reconnu que, parmi les divers procédés pouvant être implémentés pour se prémunir contre les inconvénients des méthodes classiques connues, les protocoles à apport nul de connaissance assurent jusqu'à maintenant le degré de sécurité le plus élevé. Ces protocoles à apport nul de connaissance sont fonctionnellement caractérisés par le fait qu'un nombre illimité d'interactions avec le dispositif d'identification et une analyse complète de la structure du dispositif de vérification ne sont pas suffisants pour pouvoir reconstruire les dispositifs d'identification. On peut trouver une description des procédés d'identification à apport nul de connaissance existant notamment dans le brevet américain **N° 4 748 668** au nom de FIAT et al. ou dans le brevet américain **US-A-4 932 056** au nom de Shamir. Ce dernier brevet décrit une méthode d'authentification basée sur le problème des noyaux permutés, cette méthode étant connue sous le nom de méthode PKP.

Le présent inventeur a aussi mis au point un nouveau procédé d'authentification basé sur le problème du décodage par syndrome. Cette méthode est décrite dans l'article intitulé "A new identification scheme based on syndrome decoding" de Jacques STERN présenté au congrès **CRYPTO 93** (Actes à paraître dans la collection "Lecture Notes in Computer Science"). L'inconvénient des différentes méthodes décrites ci-dessus est d'être relativement lentes lors des échanges entre les dispositifs de vérification et d'identification. D'autre part, les clés publiques ou secrètes utilisées dans ces méthodes sont en général codées sur un nombre de bits très important, nécessitant une puissance de calcul élevée et une place mémoire non négligeable.

La présente invention a donc pour but de remédier aux inconvénients mentionnés ci-dessus en proposant un nouveau procédé d'authentification qui permet une authentification rapide du dispositif d'identification par le dispositif de vérification et autorise l'emploi de clés , tant publiques que secrètes, de taille modérée.

La présente invention a pour objet un procédé d'authentification d'au moins un dispositif de vérification basé sur des techniques cryptographiques à clés secrètes et publiques, l'authentification étant réalisée par un protocole à apport nul de connaissance, caractérisé en ce que la clé publique est établie en utilisant le problème des équations linéaires contraintes. De préférence, ce procédé est caractérisé par les étapes suivantes :
- pour permettre le dialogue entre le dispositif d'identification et le dispositif de vérification, établir une clé secrète constituée par au moins un vecteur S de dimension n dont les coordonnées sont choisies dans un ensemble X fixé et une clé publique comprenant une matrice M de dimensions m x n dont les coefficients sont choisis aléatoirement parmi les entiers compris entre 0 et d-1 où d est un nombre premier proche du carré d'un nombre c, et au moins un vecteur P tel que P=g(M(S)) où g désigne une fonction qui est définie à partir de l'ensemble X et d'un sous groupe G de l'ensemble des entiers (1, 2, ...d-1) et qui associe à chaque coordonnée x du vecteur, un élément g(x) de G tel que x s'écrive d'une manière unique comme produit de g(x) et d'un élément k(x) de X,
- au niveau du dispositif d'identification, recevoir un ou plusieurs éléments aléatoires produits par le dispositif de vérification et envoyer au dispositif de vérification un engagement obtenu en appliquant une fonction de hachage cryptographique sur des paramètres fonctions de S, de M et des éléments aléatoires ,
- puis, en fonction du ou des nombres aléatoires tirés par le dispositif de vérification, tester au niveau du dispositif de vérification à l'aide des éléments reçus et de la clé publique, que les engagements sont corrects,
- répéter les opérations précédentes un nombre de fois fonction du niveau de sécurité souhaité.

Dans le procédé d'authentification ci-dessus, on utilise une matrice M de dimensions m x n, cette matrice étant commune à tous les utilisateurs et construite aléatoirement. Chaque utilisateur reçoit une clé secrète S qui est un mot de n bits dont les coordonnées sont choisies dans un ensemble X fixé. L'ensemble X est formé de c éléments, tels que tout entier compris entre 1 et d-1 s'écrive de manière unique comme produit d'un élément de G et d'un élément de X. Dans ce cas, le système calcule la clé publique P telle que P = g(M(S)).

D'autre part, le procédé d'identification est basé principalement sur la notion technique d'engagement. Si U est une séquence d'éléments binaires, un engagement pour U est l'image de U à travers une certaine fonction de hachage cryptographique. L'engagement sera utilisé comme une fonction à sens unique. La fonction de hachage proprement dite peut être réalisée par exemple suivant la méthode présentée par R. Rivest à CRYPTO 90, sous le nom de MD4 (Actes du congrès CRYPTO 90, collection "Lecture Notes in Computer Science", pp. 303-311). On peut utiliser également la modification de cette méthode introduite avec le nom MD5 ou encore le standard américain SHA (secure hash standard, Federal Information Processing Standards Publications, 30 octobre 1992). Il est enfin possible d'utiliser à la place de la fonction de hachage un algorithme de chiffrement tel que DES, où le message à hacher joue le rôle de la clé et/ou du texte clair à chiffrer. On recommande cependant d'itérer un tel procédé de façon que le condensé obtenu par hachage ait de préférence au moins 128 bits.

Le dispositif d'identification utilise par ailleurs un générateur de permutations aléatoires permutant des vecteurs binaires. Un tel générateur peut être réalisé à partir d'une source de bruit blanc numérisée, par exemple une diode polarisée en inverse dans la zone dite "du coude", ou peut aussi être construit par des méthodes logicielles comme décrit dans les brevets américains **4 817 145** au nom de GÜNTHER ou **4 649 419** au nom d'**ARAGON**.

Selon un premier mode de réalisation du procédé d'authentification, dans une première étape commune aux différents procédés, le dispositif d'identification révèle au dispositif de vérification son identité et/ou sa clé publique signée.

D'autre part, après avoir choisi aléatoirement deux vecteurs U et V de dimensions respectives m et n constitués d'entiers compris entre 0 et d-1 ainsi que deux permutations p et q respectivement sur m et n éléments, le dispositif d'identification calcule et transmet au dispositif de vérification les engagements h1, h2 et h3 définis à partir d'un dispositif de hachage par h1 =H(p,q,MU + P*V), h2 = H(U.p,V.q) et h3 = H((U + S).p, (V - T).q) où P*V désigne le produit terme à terme des composantes des vecteurs P et V, réduit modulo d et où T est le vecteur k(M(S)), lequel peut être calculé en fonction de S par le dispositif d'identification ou stocké dans une partie physiquement inviolable de la mémoire du dispositif ;
- le dispositif de vérification tire d'une façon aléatoire un nombre b tel que 0 < b < 4 ;
- si b vaut 1, alors le dispositif d'identification retourne une réponse r constituée des valeurs de p, q, U et V ;
- si au contraire b vaut 2, le dispositif d'identification retourne une réponse r constituée de p,q et des vecteurs U'= (U + S), V'=(V-T) ;
- si enfin b vaut 3, alors le dispositif retourne une réponse r constituée des vecteurs U.p, V.q ainsi que des vecteurs U" = (U +S).p et V" = (V - T).q ;
- le dispositif de vérification reçoit la réponse r, dans le cas b = 1, il calcule à partir des éléments reçus p, q, U, V, les valeurs de MU + P*V, U.p, V.q lesquelles doivent, si la réponse est correcte, être telles que h1 =H(p,q,MU + P*V) ; h2 = H(U.p, V.q) ;
- si au contraire b = 2, il calcule à partir des éléments reçus p,q U', V', les valeurs de MU' + P*V', U'.p, V'.q lesquelles doivent, si la réponse est correcte, être telles que h1 = H(p,q, MU' + P*V') et h3 = H(U'.p, V'.q) ;
- si b vaut 3, alors le dispositif de vérification vérifie les deux égalités h2 = H(U.p, V.q) et h3 = H(U", V"), de plus le dispositif de vérification calcule les deux vecteurs U" - U.p et V" - V.q et teste que ces vecteurs sont bien constitués uniquement d'éléments de X.

Selon un autre mode de réalisation privilégié de la présente invention, dans une première étape commune aux différents procédés, le dispositif d'identification révèle au dispositif de vérification son identité et/ou sa clé publique signée,
- puis après avoir choisi aléatoirement deux vecteurs U,V de tailles respectives m et n constituées d'entiers compris entre 0 et d-1 ainsi que deux permutations p et q respectivement sur m et n éléments, le dispositif d'identification transmet au dispositif de vérification les engagements h1 et h2 définis à partir du dispositif de hachage par h1 = H(p,q,MU + P*V), h2 = (U.p, V.q), où P*V désigne le produit terme à terme des composantes des vecteurs P et V réduits modulo d,
- le dispositif de vérification tire de façon aléatoire un nombre a compris entre 0 et d - 1 ;
- alors le dispositif d'identification calcule et envoie au dispositif de vérification les vecteurs Y = (aS + U).p et Z = (aT - V).q où T est le vecteur k(M(S)), lequel peut être calculé en fonction de S par le dispositif d'identification ou stocké dans une partie physiquement inviolable de la mémoire du dispositif ;
- le dispositif de vérification tire de façon aléatoire un bit b = 0 ou 1 ;
- si b vaut 0, alors le dispositif d'identification retourne une réponse r constituée des valeurs de p et q ;
- si au contraire b vaut 1, le dispositif retourne une réponse r constituée des vecteurs U' = S.p et V' = T.q ;
- le dispositif de vérification reçoit la réponse r, dans le cas b = 0, il calcule à partir de p et q les vecteurs X' et Z' tels que (Y').p = Y et (Z').q = Z, puis le vecteur M(Y') - P*Z' lequel doit si la réponse est correcte être tel que h1 = H(p,q,M(Y') - P*Z') ;
- si b = 1, alors le dispositif de vérification calcule les vecteurs Y - aU' et aV' - Z lesquels doivent si la réponse est correcte être tels que h2 = H(Y - aU', aV' - Z) et le dispositif de vérification teste de plus que les vecteurs U' et V' sont constitués uniquement d'éléments de X.

D'autres caractéristiques et avantages de la présente invention apparaîtront à la lecture de la description de deux modes de réalisation du procédé, cette description étant faite avec référence aux dessins ci-annexés, dans lesquels :
- la figure 1 est un schéma expliquant un premier mode de mise en oeuvre du procédé d'authentification conforme à la présente invention, et
- la figure 2 est un schéma d'un second mode de réalisation du procédé conforme à la présente invention.

La présente invention concerne donc un nouveau procédé d'authentification réalisé par un protocole à apport nul de connaissance. Dans ce cas, la sécurité du procédé est basée sur le problème des équations linéaires contraintes. Ce problème consiste à trouver n valeurs satisfaisant un certain nombre d'équations linéaires modulo un nombre premier d, ces valeurs étant de plus contraintes à se trouver dans un ensemble prescrit X. Le problème posé ci-dessus est en fait très difficile à résoudre par les moyens de calcul connus à ce jour dès que le nombre de variables est grand. Le système décrit correspond, en fait, au cas de m équations à n + m variables et, avec des valeurs m = n = 20, on dépasse déjà largement les possibilités des calculateurs.

Pour mettre en oeuvre le procédé d'authentification conforme à la présente invention, une autorité choisie et publie une matrice M de dimensions m x n, de préférence m = n, cette matrice étant constituée de coefficients choisis aléatoirement parmi les entiers compris entre 0 et d - 1. d est en général un nombre premier proche du carré d'un nombre c. De préférence, d = 257, à savoir (16 x 16) + 1. L'autorité choisit aussi une collection de vecteurs S de dimensions n dont les coordonnées sont choisies aléatoirement dans un ensemble X. L'ensemble X est déterminé en fonction d'un ensemble G appelé groupe multiplicatif formé de la suite des puissances successives d'un nombre réduites modulo d, cet ensemble étant choisi de façon que le nombre d'éléments de G soit c. Dans ce cas, il existe alors un ensemble X formé également de c éléments et tel que tout entier compris entre 1 et d-1 s'écrive de manière unique comme produit d'un élément de l'ensemble G et d'un élément de l'ensemble X. On notera donc g(u) l'élément de G intervenant dans l'unique décomposition d'un entier u compris entre 1 et d-1 et k(u) l'élément correspondant de X. Si U est un vecteur d'entiers compris entre 1 et d-1, g(u) est formé des images par G des coordonnées de U. On définit de même k(U).

La clé secrète ainsi déterminée est distribuée aux différents dispositifs d'identification. D'autre part, on publie l'ensemble des clés publiques constituées par le vecteur P = g(M (S)). Dans le cadre de la présente invention, cette clé publique peut être codée sur un faible nombre d'octets de même que la clé secrète S par l'intermédiaire d'une table des éléments de G et de X. Ainsi, dans le cas où d = 257 et où m = n = 20, on obtient des clés de 10 octets, ce qui constitue un avantage du présent procédé par rapport aux autres procédés à apport nul de connaissance connus à ce jour.

On décrira maintenant deux modes de réalisation spécifiques du procédé de la présente invention.

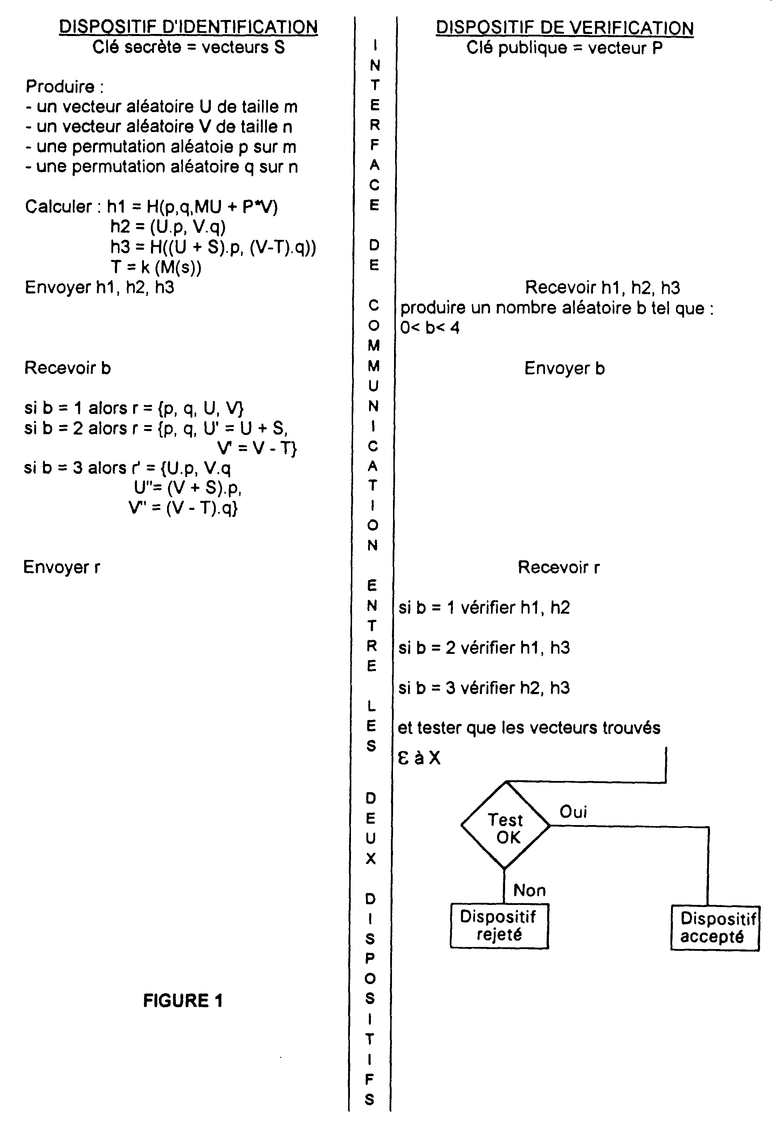

Le premier procédé sera décrit avec référence à la figure 1 qui représente schématiquement le protocole de communication mis en oeuvre entre un dispositif d'identification et le dispositif de vérification, pour réaliser une authentification. Les dispositifs d'identification qui peuvent être constitués, par exemple, par des cartes à puces ou des clés électroniques doivent être physiquement inviolables. Ainsi, pour une carte à puce, il doit être impossible d'accéder à sa mémoire interne. Rien par contre n'est supposé concernant l'environnement dans lequel évolue le dispositif de vérification. D'autre part, le dispositif d'identification comporte dans une mémoire non volatile sa clé secrète S, à savoir le vecteur S de dimension n et la matrice M de dimension m x n tandis que le dispositif de vérification comporte dans une mémoire non volatile l'ensemble des clés publiques constituées des vecteurs P, ou bien des données suffisantes pour vérifier qu'une clé P signée a bien été produite par l'autorité compétente. Quand un dispositif d'identification veut entrer en contact avec un dispositif de vérification, les deux dispositifs exécutent le protocole suivant :
- tout d'abord le dispositif d'identification révèle son identité et/ou sa clé signée au dispositif de vérification qui vérifie que l'identité en question correspond bien à P ;
- ensuite le dispositif d'identification choisit deux vecteurs aléatoires U,V de tailles respectives m et n, de préférence m = n, constitués d'entiers compris entre 0 et d-1 ainsi que deux permutations aléatoires p et q, respectivement sur m et n éléments. Alors, le dispositif d'identification calcule les éléments suivants : h1 = H(p,q,MU + P*V), h2 = H(U.p, V.q) et h3 = H((U + S).p, (V-T).q) où P*V désigne le produit terme à terme des composantes des vecteurs P et V réduit modulo d et où T est le vecteur k(M(S)). Une fois le calcul effectué, le dispositif d'identification envoie au dispositif de vérification l'engagement h1, h2, h3. Alors, le dispositif de vérification tire de façon aléatoire un nombre b tel que 0 < b < 4 et l'expédie au dispositif d'identification ;
- ensuite le dispositif d'identification calcule et envoie au dispositif de vérification une réponse r définie par :
   - si b = 1, alors r est constituée des valeurs de p, q, U et V ;
   - si b = 2, alors r est constituée de p,q et des vecteurs U' = (U + S) et V' = (V - T) ;
   - si b = 3, alors r est constituée des vecteurs U.p, V.q et des vecteurs U" = (U + S).p et V" = (V - T).q.

Le dispositif de vérification reçoit la réponse r et,
- si b = 1, il calcule à partir des éléments reçus p,q, U,V les valeurs de MU + P*V, U.p, V.q, et ces valeurs doivent, si la réponse est correcte, être telles que h1 = H(p,q,MU + P*V), h2 = H(U.p, V.q) ;
- si b = 2, le dispositif de vérification calcule à partir des éléments reçus p,q, U', V' les valeurs de MU' + P*V', U'.p, V'.q et ces valeurs doivent, si la réponse est correcte, être telles que h1 = H(p,q,MU' + P*V), h3 = H(U'.p, V'.q) ;
- si b = 3, alors le dispositif de vérification vérifie les deux égalités h2 = H(U.p, V.q) et h3 = H(U".p, V".q). De plus, le dispositif de vérification calcule les deux vecteurs U" - U.p et V.q - S" et teste que ces vecteurs sont bien constitués uniquement d'éléments de l'ensemble X. Si le test ci-dessus s'est avéré correct, le dispositif de vérification considère que le protocole s'est terminé par un succès. Si le test n'est pas correct, le dispositif d'identification est rejeté.

Le dispositif de vérification répète les étapes ci-dessus un nombre t de fois, fonction du niveau de sécurité requis. Lorsque le dispositif est accepté, on envoit une impulsion de commande sur l'interface entrée/sortie du système protégé qui permet la mise en route de la transaction ultérieure.

L'ensemble des opérations ci-dessus est symbolisé sur la figure 1 dans laquelle la partie de gauche représente les différentes opérations réalisées au niveau du dispositif d'identification, tandis que la partie de droite représente les différentes opérations réalisées au niveau du dispositif de vérification, les flèches symbolisant l'envoi d'informations d'un dispositif vers l'autre.

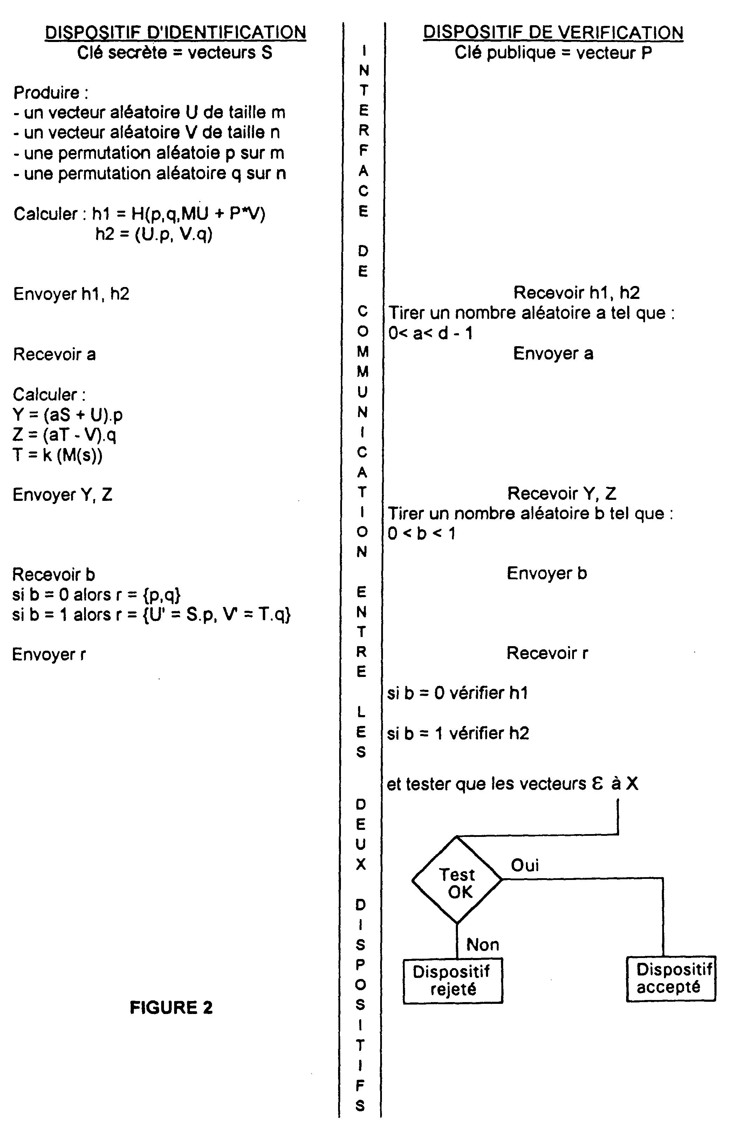

Un autre mode de mise en oeuvre du procédé d'authentification de la présente invention sera maintenant décrit avec référence à la figure 2.

Ce second mode de réalisation demande plus de calculs que le mode de réalisation précédent, mais la probabilité de succès d'une entité illégale décroit plus vite. Ce mode de réalisation comporte donc les étapes suivantes, symbolisées sur la figure 2 de manière identique à la symbolisation utilisée sur la figure 1. Dans ce cas, le dispositif d'identification révèle au dispositif de vérification son identité ou sa clé publique signée de la même manière que dans l'autre mode de réalisation.

Puis après avoir choisi aléatoirement deux vecteurs V de tailles respectives m et n, (m pouvant être égal à n) constitués d'entiers compris entre 0 et d-1 ainsi que deux permutations p et q respectivement sur m et n éléments, le dispositif d'identification calcule les éléments suivants à savoir : h1 = H(p,q,MU + P*V), h2 = (U.p, V.q), ou P*V désigne le produit terme à terme des composantes des vecteurs P et V modulo d et H désigne une fonction de hachage cryptographique. Alors, l'engagement h1 et h2 est envoyé sur le dispositif de vérification. Le dispositif de vérification tire de façon aléatoire un nombre a compris entre 0 et d - 1 et l'envoie sur le dispositif d'identification.

Alors, le dispositif d'identification calcule et envoie au dispositif de vérification les vecteurs Y = (aS + U).p et Z = (aT - V).q où T est le vecteur k(M(S)) qui peut être calculé en fonction de S par le dispositif d'identification ou stocké dans une partie physiquement inviolable de la mémoire du dispositif.

Ensuite le dispositif de vérification tire de façon aléatoire un bit b qui peut être égal à 0 ou à 1 :
- si b = 0, alors le dispositif d'identification envoie une réponse r constituée des valeurs de p, q ;
- si b = 1, le dispositif d'identification envoie une réponse r constituée des vecteurs U' = S.p et V' = T.q ;

Le dispositif de vérification reçoit la réponse r et :
- si b = 0, il calcule à partir de p, q les vecteurs Y' et Z' tels que (Y').p = Y et (Z').q = Z puis le vecteur M(Y') - P*Z' qui, si la réponse est correcte, doit être tel que h1 = H(p,q,M (Y') - P*Z') ;
- si b = 1, alors le dispositif de vérification calcule les vecteurs Y - aU' et aV' - Z qui, si la réponse est correcte, doivent être tels que h2 = H(Y - aU', aV' - Z). Alors le dispositif de vérification teste, de plus, que les vecteurs U' et V' sont constitués uniquement d'éléments appartenant à l'ensemble X.

Si le test correspondant à b est correct, le dispositif de vérification considère que le protocole s'est terminé par un succès et le dispositif d'identification est accepté et on envoie une impulsion de commande sur l'interface entrée/sortie du système protégé qui permet la mise en route de la transaction ultérieure. Si le test n'est pas correct, le dispositif d'identification est rejeté.

Pour accroître la sécurité du procédé, les deux dispositifs d'identification et de vérification répètent les étapes ci-dessus plusieurs fois, à savoir t fois, le dispositif de vérification n'authentifiant le dispositif d'identification que si toutes les sessions du protocole se sont soldées par un succès. De préférence, on choisit t tel que 0 < t < 60, les valeurs t = 35 et t = 20 constituant respectivement pour le premier et le second mode de réalisation, des exemples typiques apportant une sécurité suffisante pour nombre d'applications.

On a décrit ci-dessus deux modes de réalisation particuliers qui peuvent être modifiés sans sortir du cadre de la présente invention.

## Revendications

1. Procédé d'authentification d'au moins un dispositif d'identification par un dispositif de vérification basé sur des techniques cryptographiques à clés secrètes et publiques, l'authentification étant réalisée par un protocole à apport nul de connaissance, **caractérisé en ce que** la clé publique est établie en utilisant le problème des équations linéaires contraintes.

2. Procédé selon la revendication 1, **caractérisé en ce qu'**il comporte les étapes suivantes :
- pour permettre le dialogue entre le dispositif d'identification et le dispositif de vérification, établir une clé secrète constituée par au moins un vecteur S de dimension n dont les coordonnées sont choisies dans un ensemble X fixé et une clé publique comprenant une matrice M de dimensions m x n dont les coefficients sont choisis aléatoirement parmi les entiers compris entre 0 et d-1 où d est un nombre premier proche du carré d'un nombre c, et au moins un vecteur P tel que P=g(M(S)) où g désigne une fonction qui est définie à partir de l'ensemble X et d'un sous groupe G de l'ensemble des entiers (1, 2..d-1) et qui associe à chaque coordonnée x d'un vecteur, un élément g(x) de G tel que x s'écrive d'une manière unique comme produit de g(x) et d'un élément k(x) de X,
- au niveau du dispositif d'identification, recevoir un ou plusieurs éléments aléatoires (U,V,p,q) produits par le dispositif de vérification et envoyer au dispositif de vérification un engagement obtenu en appliquant une fonction de hachage cryptographique sur des paramètres fonctions de S, de M et des éléments aléatoires tirés par le dispositif de vérification,
- puis, en fonction du ou des nombres aléatoires tirés par le dispositif de vérification, tester au niveau du dispositif de vérification à l'aide des éléments reçus et de la clé publique, que les engagements sont corrects.

3. Procédé selon l'une quelconque des revendications 1 et 2, **caractérisé en ce que** l'on répète les opérations précédentes un nombre de fois fonction du niveau de sécurité souhaité.

4. Procédé selon l'une quelconque des revendications précédentes, **caractérisé en ce que** l'ensemble X est formé de c éléments tels que tout entier compris entre 1 et d-1 s'écrive de manière unique comme produit d'un élément de G et d'un élément de X.

5. Procédé selon l'une quelconque des revendications 1 à 4, **caractérisé en ce que** les éléments aléatoires sont constitués par deux vecteurs U et V de dimensions respectives m et n et constitués d'entiers compris entre 0 et d-1 et par deux permutations p et q respectivement sur m et n éléments.

6. Procédé selon l'une quelconque des revendications 1 à 5, **caractérisé en ce que** m = n.

7. Procédé selon l'une quelconque des revendications 1 à 6, **caractérisé en ce que** d = 257 et n = 20.

8. Procédé selon l'une quelconque des revendications 1 à 6, **caractérisé en ce que**, au début de chaque dialogue, le dispositif d'identification révèle au dispositif de vérification son identité et/ou sa clé publique signée.

9. Procédé selon l'une quelconque des revendications 1 à 8, **caractérisé en ce que**, une fois le dialogue établi entre le dispositif d'identification et le dispositif de vérification et les éléments aléatoires choisis :
- le dispositif d'identification calcule et transmet au dispositif de vérification les engagements h1 et h2 définis à partir d'un dispositif de hachage par h1 =H(p,q,MU+P*V), h2 = (U.p,V.q) où P*V désigne le produit terme à terme des composantes des vecteurs P et V, réduit modulo d ;
- le dispositif de vérification tire d'une façon aléatoire un nombre a compris entre 0 et d-1 ;
- alors, le dispositif d'identification calcule et envoie au dispositif de vérification les vecteurs Y=(aS+U).p et Z=(aT-V).q, où T est le vecteur k(M(S)) ;
- le dispositif de vérification tire de façon aléatoire un bit b=0 ou 1 ;
- si b vaut 0, alors le dispositif d'identification retourne une réponse r constituée des valeurs de p, q ;
- si b vaut 1, le dispositif d'identification retourne une réponse r constituée des vecteurs U' =S.p et V'=T.q ;
- le dispositif de vérification reçoit la réponse r, dans le cas b=0, il calcule, à partir de p et q les vecteurs Y' et Z' tels que (Y').p=Y et (Z').q=Z, puis le vecteur M(Y')-P*Z' lequel doit, si la réponse est correcte, être tel que h1 =H(p,q,M(Y')-P*Z') ;
- si maintenant b = 1, alors le dispositif de vérification calcule les vecteurs Y-aU' et aV'-Z, lesquels doivent, si la réponse est correcte, être tels que h2 = H(Y-aU',aV'-Z), le dispositif de vérification testant de plus que les vecteurs U' et V' sont constitués uniquement d'éléments de X.

10. Procédé selon l'une quelconque des revendications 1 à 8, **caractérisé en ce que**, une fois le dialogue établi entre le dispositif d'identification et le dispositif de vérification et les éléments aléatoires choisis :
- le dispositif d'identification calcule et transmet au dispositif de vérification les engagements h1, h2 et h3 définis à partir d'un dispositif de hachage par h1 = H(p,q,MU+P*V), h2 = H(U.p,V.q) et h3=H((U+S).p,(V-T).q) où P*V désigne le produit terme à terme des composantes des vecteurs P et V, réduit modulo d et où T est le vecteur k(M(S)) ;
- le dispositif de vérification tire de façon aléatoire un nombre b tel que 0<b<4 ;
- si b vaut 1, alors, le dispositif d'identification retourne une réponse r constituée des valeurs de p,q,U et V ;
- si b vaut 2, alors le dispositif retourne une réponse r constituée de p,q et des vecteurs U' = (U + S) et V'=(V-T) ;
- si b vaut 3, alors le dispositif retourne une réponse r constituée des vecteurs U.p, V.q ainsi que des vecteurs U" = (U + S).p et V" = (V-T).q ;
- le dispositif de vérification reçoit la réponse r, dans le cas b = 1, il calcule à partir des éléments reçus p,q,U,V, les valeurs de MU+P*V, U.p, V.q lesquelles doivent, si la réponse est correcte, être telles que h1 = H(p,q,MU+P*V), h2=H(U.p,V.q) ;
- si au contraire b vaut 2, il calcule à partir des éléments reçus p,q,U',V', les valeurs de MU'+P*V', U'.p, V'.q lesquelles doivent, si la réponse est correcte, être telles que h1 =H(p,q,MU'+P*V') et h3=H(U'.p,V'.q) ;
- si enfin b vaut 3, alors le dispositif de vérification vérifie les deux égalités h2=H(U.p,V.q) et h3 =H(U",V"), de plus, le dispositif de vérification calcule les deux vecteurs U"-U.p et V.q-V" et teste que ces vecteurs sont bien constitués uniquement d'éléments de X.

11. Procédé selon l'une quelconque des revendications 9 et 10, **caractérisé en ce que** l'on répête les étapes ci-dessus un nombre t de fois, fonction du niveau de sécurité requis, le dispositif de vérification n'authentifiant le dispositif d'identification que si toutes les sessions du protocole se sont soldées par un succès.

12. Procédé selon l'une quelconque des revendications 9 et 10, **caractérisé en ce que** le vecteur k (M(S)) est calculé en fonction de S par le dispositif d'identification ou est stocké dans une partie physiquement inviolable de la mémoire du dispositif.

## Patentansprüche

1. Verfahren zur Authentifizierung wenigstens einer Identifkationsvorrichtung durch eine Verifikationsvorrichtung, basierend auf technischen Verschlüsselungen mit geheimen und öffentlichen Schlüsseln, wobei die Authentifizierung durch ein Nullkenntnis-Protokoll erfolgt,
**dadurch gekennzeichnet, daß**
der öffentliche Schlüssel unter Anwendung des Problems der eingeschränkten linearen Gleichungen gebildet wird.

2. Verfahren nach Anspruch 1, **gekennzeichnet durch** folgende Schritte:
- zur Ermöglichung des Dialogs zwischen der Identifikationsvorrichtung und der Verifikationsvorrichtung werden ein geheimer Schlüssel, der aus wenigstens einem Vektor S mit der Größe n besteht, dessen Koordinaten aus einem festen Satz X gewählt sind, und ein öffentlicher Schlüssel gebildet, der eine Matrix M mit Abmessungen m x n enthält, deren Koeffizienten zufallsmäßig unter ganzzahligen Werten zwischen 0 und d-1, wobei d eine Primzahl in der Nähe des Quadrates einer Zahl c ist, und wenigstens ein Vektor P gewählt werden, derart, daß P = g(M(S)) ist, wo g eine Funktion bezeichnet, die aus dem Satz X und einer Untergruppe G des Satzes der ganzen Zahlen (1, 2...d-1) gebildet ist und der jeder Koordinaten x eines Vektors ein Element g(x) von G derart zuordnet, daß x nur als Produkt von g(x) und eines Elementes k(x) von X geschrieben wird,
- bei der Identifikationsvorrichtung werden ein oder mehrere Zufallselemente (U, V,p, q) empfangen, die **durch** die Verifikationsvorrichtung erzeugt sind, und zu der Verifikationsvorrichtung wird eine Meldung geschickt, die **dadurch** gewonnen ist, indem eine Funktion mit verschlüsselter Aufteilung auf die Funktionsparameter von S, von M und den Zufallselementen angewendet wird, die **durch** die Verifikationsvorrichtung gewonnen werden,
- dann wird in Abhängigkeit von der oder den Zufallszahlen, die **durch** die Verifikationsvorrichtung gewählt werden, bei der Verifikationsvorrichtung mittels der empfangenen Elemente und des öffentlichen Schlüssels geprüft, ob die Meldungen richtig sind.

3. Verfahren nach einem der Ansprüche 1 und 2, **dadurch gekennzeichnet, daß** die vorangehenden Vorgänge in Abhängigkeit von dem gewünschten Wert der Sicherheit mehrfach wiederholt werden.

4. Verfahren nach einem der vorangehenden Ansprüche, **dadurch gekennzeichnet, daß** der Satz X durch c Elemente gebildet ist, die alle zwischen 1 und d-1 liegen und sich nur als Produkt eines Elementes von G und eines Elementes von X schreiben.

5. Verfahren nach einem der Ansprüche 1 bis 4, **dadurch gekennzeichnet, daß** die Zufallselemente durch zwei Vektoren U und V mit den Abmessungen m bzw. n gebildet sind, die aus ganzen Zahlen zwischen 0 und d-1 und zwei Vertauschungen p bzw. q der m und n Elemente bestehen.

6. Verfahren nach einem der Ansprüche 1 bis 5, **dadurch gekennzeichnet, daß** m = n ist.

7. Verfahren nach einem der Ansprüche 1 bis 6, **dadurch gekennzeichnet, daß** d = 257 und n = 20 ist.

8. Verfahren nach einem der Ansprüche 1 bis 6, **dadurch gekennzeichnet, daß** zu Beginn jedes Dialogs die Identifikationsvorrichtung der Verifikationsvorrichtung ihre Identität und/oder ihren öffentlichen Schlüssel mitteilt.

9. Verfahren nach einem der Ansprüche 1 bis 8, **dadurch gekennzeichnet, daß** dann, wenn der Dialog zwischen der Identifikationsvorrichtung und der Verifikationsvorrichtung und den gewählten Zufallselementen hergestellt ist:
- die Identifikationsvorrichtung die Meldungen h1 und h2 von einer Verteilvorrichtung mit h1=H(p,q,MU+P*V), h2 = (U.p,V.q), wobei P*V das Produkt Ausdruck für Ausdruck der Komponenten der Vektoren P und V, reduziert um Modulo d, bestimmt sind, berechnet und zu der Verifikationsvorrichtung überträgt,
- die Verifikationsvorrichtung zufallsmäßig eine Zahl zwischen 0 und d-1 wählt,
- dann die Identifikationsvorrichtung die Vektoren Y = (aS+U).p und Z = (aT-V).q berechnet und zu der Verifikationsvorrichtung sendet, wobei T der Vektor k(M(S)) ist,
- die Verifikationsvorrichtung zufallsmäßig ein Bit b = 0 oder 1 wählt,
- wenn b den Wert 0 hat, die Identifikationsvorrichtung eine durch Werte von p, q gebildete Antwort r zurücksendet,
- wenn b den Wert 1 hat, die Identifikationsvorrichtung eine aus den Vektoren U' = S.p und V' = T.q gebildete Antwort r zurückgesendet,
- die Verifikationsvorrichtung die Antwort r empfängt, in dem Fall b = 0 sie aus p und q der Vektoren Y'und Z', wie (Y').p = Y und (Z').q = Z, dann den Vektor M(Y')-P*Z' berechnet, der, wenn die Antwort richtig ist, so sein muß, daß h1=H(p,q,M(Y')-P*Z'),
- wenn jetzt b=1 ist, dann die Verifikationsvorrichtung die Vektoren Y-aU' und aV'-Z berechnet, die dann, wenn die Antwort richtig ist, so sein müssen, daß h2 = H(Y-aU', aV'-Z) die Verifikationsvorrichtung außerdem prüft, ob die Vektoren U' und V' nur aus Elementen von X bestehen.

10. Verfahren nach einem der Ansprüche 1 bis 8, **dadurch gekennzeichnet, daß** dann, wenn der Dialog zwischen der Identifikationsvorrichtung und der Verifikationsvorrichtung und den gewählten Zusatzelementen hergestellt ist:
- die Identifikationsvorrichtung die Festschreibungen h1, h2 und h3, die von einer Störvorrichtung durch h1 = H(p,q,MU+P*V), h2 = H(U.p,V.q) und h3 = H((U+S).p,(V-T).q) gebildet sind, berechnet und zu der Verifikationsvorrichtung überträgt, wobei P*V das Produkt Ausdruck für Ausdruck der Komponenten der Vektoren P und V, reduziert Modulo d bezeichnet, und wo T der Vektor k(M(S)) ist,
- die Verifikationsvorrichtung zufallsmäßig eine Zahl b wie 0<b<4 wählt,
- wenn b den Wert 1 hat, die Identifikationsvorrichtung eine aus den Werten von p, q, U und V gebildete Antwort r zurücksendet,
- wenn b den Wert 2 hat, die Vorrichtung eine durch p, q und die Vektoren U' = (U+S) und V' = (V-T) gebildete Antwort r zurücksendet,
- wenn b den Wert 3 hat, die Vorrichtung eine durch die Vektoren U.p, V.q sowie die Vektoren U"= (U+S).p und V"= (V-T).q gebildete Antwort r zurücksendet,
- wenn die Verifikationsvorrichtung in dem Fall b = 1 die Antwort r empfängt, aus den empfangenen Elementen p, q, U, V die Werte von MU+P*V, U.p, V.q berechnet, die dann, wenn die Antwort richtig ist, derart sein müssen, daß h1 = H(p,qMU+P*V), h2 = H(U.p, V.q),
- wenn jedoch b den Wert 2 hat, sie aus den empfangenen Elementen p, q, U', V' die Werte von MU'+P*V, U'.p, V'.q berechnet, die dann, wenn die Antwort richtig ist, so sein müssen, daß h1 = H(p,q,MU'+P*V') und h3 = H(U'.p, V'.q),
- wenn schließlich b den Wert 3 hat, die Verifikationsvorrichtung die beiden Gleichheiten h2 = H(U.p,V.q) und h3 = H(U",V") prüft und zusätzlich die Verifikationsvorrichtung die beiden Vektoren U"-U.p und V.q-V" berechnet und prüft, ob diese Vektoren wirklich nur aus Elementen von X bestehen.

11. Verfahren nach einem der Ansprüche 9 und 10, **dadurch gekennzeichnet, daß** die obigen Schritte um eine Zahl t-mal wiederholt werden, die abhängig ist von dem geforderten Wert der Sicherheit, und die Verifikationsvorrichtung die Identifikationsvorrichtung nur dann authentifiziert, wenn alle Protokollvorgänge sich erfolgreich erwiesen haben.

12. Verfahren nach einem der Ansprüche 9 und 10, **dadurch gekennzeichnet, daß** der Vektor k (M(S)) in Abhängigkeit von S durch die Identifikationsvorrichtung berechnet oder in einem physisch unzugänglichen Teil des Speichers der Vorrichtung gespeichert wird.

## Claims

1. Procedure for the authentication of at least one prover by a verifier based on cryptographic techniques using secret and public keys, this authentication being achieved by means of a zero-knowledge protocol, wherein the public key is established using the problem of constrained linear equations.

2. Procedure according to claim 1, comprising the following steps :
- to enable a dialog between the prover and the verifier, establish a secret key, consisting of at least one vector S of dimension n whose co-ordinates are chosen from a fixed set X, and a public key comprising a matrix M of dimensions m x n whose coefficients are chosen at random from integer values from 0 to d-1, where d is a prime integer close to the square of a number c, and at least one vector p such that P = g(M(S)), where g is a function defined by a set X and a subgroup G of the set of integers (1,2,...d-1) and which associates an element g(x) of G to each co-ordinate x of the vector P such that x is described uniquely as the product of g(x) and an element k(x) of X ;
at the level of the verifier, to receive one or more random numbers (U,V,p,q) generated by the verifier, then returns to the verifier a commitment obtained by applying a cryptographic hash function to parameters which are functions of S, M and the random numbers extracted by the prover;
- depending on the random number(s) chosen by the verifier, the verifier checks, using the values received and the public key, that the commitment is correct.

3. Procedure according to claim 1, wherein the steps are repeated a number of times to provide a higher level of security.

4. Procedure according to one of the preceding claims, wherein the set X is composed of c elements such that all integers from 1 to d-1 can be defined in a unique manner as the product of an element of G and an element of X.

5. Procedure according to one of the claims 1 to 4, wherein the random elements are constituted by two vectors U and V, of dimensions m and n respectively, composed of integers from 0 to d-1 and by two permutations p and q respectively of m and n elements.

6. Procedure according to one of the claims 1 to 5, wherein m = n.

7. Procedure according to one of the claims 1 to 6, wherein d = 257 and n = 20.

8. Procedure according to one of the claims 1 to 6, wherein, at the start of each authentication dialog, the prover reveals its identity and/or its signed public key to the verifier.

9. Procedure according to one of the claims 1 to 8, wherein, once the dialog between the prover and the verifier has been established and the random elements have been selected :
- the prover calculates and sends to the verifier the commitments h1 and h2 generated via a hash device by :
h1 = H(p,q,MU + P*V)
h2 = H(U.p, V.q)
where P*V designates the term-by-term product of the components of vectors P and V, modulo d.
- The verifier chooses at random a number "a" from 0 to d-1.
- The prover calculates and sends to the verifier vectors :
Y = (aS + U).p and
Z = (aT - V). q
where T is the vector k(M(S)).
- The verifier chooses at random a bit "b" (= 0 or 1),
if b = 0, the prover returns a reply r consisting of the values p and q,
if b = 1 , the prover returns a reply r consisting of vectors U' = S.p and V' = T.q.
- The verifier receives the reply r and proceeds as follows :
If b = 0, it calculates from the elements received (p, q) the vectors Y' and Z' such that (Y').p = Y and (Z').q = Z, then the vector M(Y') P*Z which must, if the reply is correct, be such that :
H1 = H(p,q,M(Y') - P*Z) ;
If b = 1, the verifier calculates from the elements received the vectors Y-aU' and aV' - Z, which must, if the reply is correct, be such that :
h2 = H(Y - aU, aV' - Z)
and the verifier also checks that the vectors U' and V' contain only elements of X.

10. Procedure according to one of the claims 1 to 8, wherein, once the dialog between the prover and the verifier has been established and the random elements have been selected :
- the prover calculates and sends to the verifier the commitments h1, h2 and h3 generated via a hash device by :
h1 = H(p,q,MU + P*V)
h2 = H(U.p, V.q) and
h 3 = H (U + S). p, (V - T). q)
where P*V designates the term-by-term product of the components of vectors P and V, modulo d, and T is the vector k(M(S)).
The verifier chooses at random a number "b" such that 0<b<4,
. if b = 1 , the prover returns a reply r consisting of values p, q, U and V ;
. if b = 2, the prover returns a reply r consisting of p,q and vectors U' = (U + S) and V' = (V - T) ;
. If b = 3, the prover returns a reply r consisting of the vectors U;p, V.q, U" = (U + S).p and V" = (V - T).q.
- the verifier receives the reply r and proceeds as follows :
. If b = 1, it calculates from the elements received (p, q, U and V) the values of MU + P*V, U.p and V.q which must, if the reply is correct, be such that :
h1 = H(p,q, MU - P*V)
h2 = H(U.p,V.q) ;
. If b = 2, it calculates from the elements received (p, q, and vectors U' and V') the values of MU' + P*V', U'.p, and V'.q, which must, if the reply is correct, be such that :
h1 = H(p,q, - MU' + P*V) and
h 3 =H (U'. p, V'. q)
If b = 3, it verifies the two following equalities :
h2 = H(U.p, V.q)
h3 = H(U", V")
and the verifier also calculates the two vectors U" - U.p and V" - V.q and checks that they are composed only of elements of X.

11. Procedure according to one of the claims 1, 9 and 10, wherein the steps of the authentication operation are iterated t times, where t increases with the level of security required, the verifier authenticating the prover only if the tests in all the rounds are successful.

12. Procedure according to one of the claims 9 and 10, wherein the vector k(M(S)) is calculated as a function of S by the prover or stored in a physically inaccessible part of the memory of the prover.
